# EUROPEAN PATENT APPLICATION

(11) **EP 4 700 644 A1**
(43) Date of publication of application: **25.02.2026**
(21) Application number: 25194127.4
(22) Date of filing: 05.08.2025
(51) Int. Cl.: G06F 40/237, G06F 40/268, G06F 40/284

(54) **MORPHOLOGICALLY AWARE TOKENIZER**

(30) Priority: 05.08.2024 US 202463679403 P
(71) Applicant: Hamad Bin Khalifa University, Doha (QA)
(72) Inventor: Asgari, Ehsaneddin, BOX 34110 Doha (QA); El Kheir, Yassine, 34110 Doha (QA)
(74) Representative: K&L Gates LLP

(57) **Abstract**

The present disclosure provides for a morphologically aware tokenizer. According to one aspect of the present disclosure a morphologically aware tokenizer. According to a second aspect of the present disclosure a method of using a f morphologically aware tokenizer.

## Description

### PRIORITY CLAIM AND CROSS-REFERENCE TO RELATED APPLICATIONS

The present application claims priority to and the benefit of U.S. Provisional Patent Application No. 63/679,403 filed August 5, 2024, which is incorporated herein by reference in its entirety and relied upon.

### BACKGROUND

Tokenization is a fundamental preprocessing step in NLP, converting raw text into structured units such as bytes (Gillick et al., 2016), characters (Al-Rfou et al., 2019), subwords (Sennrich et al., 2016), words, or multi-word expressions (Gee et al., 2023). Its effectiveness directly influences downstream tasks, as tokenization errors can propagate through the pipeline, impacting overall model performance (Sajjad et al., 2017; Adel et al., 2018). Over the years, tokenization has advanced from basic whitespace-based segmentation to sophisticated statistical and neural approaches (Smit et al., 2014; Otani et al., 2020). In Large Language Models (LLMs), tokenization significantly affects efficiency, context length, and representational accuracy (Dagan et al., 2024). Although tokenization-free architectures have been investigated as potential alternatives (Clark et al., 2022; Deiseroth et al., 2024), most state-of-the-art models-including Gemma (Team et al., 2024), LLaMA (Touvron et al., 2023), DeepSeek (Bi et al., 2024) and OpenAI's GPT series-still rely on Byte Pair Encoding ("BPE")-based tokenization for most languages, retaining both its benefits and inherent limitations.

The additive nature of Byte Pair Encoding (BPE) makes it well-suited for concatenative morphology, as seen in English, where morphemes are linearly appended. However, it struggles with non-concatenative morphological systems, such as root-and-pattern morphology in Arabic and Hebrew, where meaning is encoded through non-linear in-fixation (Khaliq and Carroll, 2013). Similarly, agglutinative languages like Turkish, Hungarian, and Korean pose challenges, as their highly productive affixation processes complicate adherence to morpheme boundaries (Hakkani-Tiir et al., 2000). These languages require finer-grained tokenization to preserve linguistically meaningful subword structures. Standard BPE and byte-level tokenization methods often struggle to represent these complex morphological patterns effectively, emphasizing the necessity for morphology-sensitive tokenization approaches that better align with the diverse structural properties of different word formation processes (Marco and Fraser, 2024).

Analyzing BPE output across morphologically rich languages, it is observed that its segmentation often disregards meaningful morpheme boundaries, introducing ambiguity and disrupting semantic coherence. For instance, in Arabic, the word Al-Rahman, "The Merciful" may be incorrectly segmented into min, "whom" al, "the" + rah, an incomplete fragment. Here, min, a frequent token, is semantically unrelated to the original word, increasing the model's burden in reconstructing meaningful representations. Similar challenges arise in agglutinative and polysynthetic languages, where BPE's greedy merging strategy often fails to align with true morpheme boundaries.

While purely morphology-based segmentation could mitigate these issues, it has also shown limitations in aligning with naturally occurring linguistic patterns in corpus-based learning (Dur-rani et al., 2019; Marco and Fraser, 2024). Thus, developing tokenization methods that balance morphological integrity with statistical efficiency remains a critical challenge for multilingual NLP.

As such there is a need for methods and systems for a morphologically aware tokenizer.

### SUMMARY

Example systems, methods, and apparatus are disclosed herein for a morphologically aware tokenizer.

In light of the disclosure herein, and without limiting the scope of the invention in any way, in a first aspect of the present disclosure, which may be combined with any other aspect listed herein unless specified otherwise, a system for a morphologically aware tokenizer, the system including a Byte Pair Encoder, and an algorithm for morphologically aware Byte Pair Encoding, the algorithm including

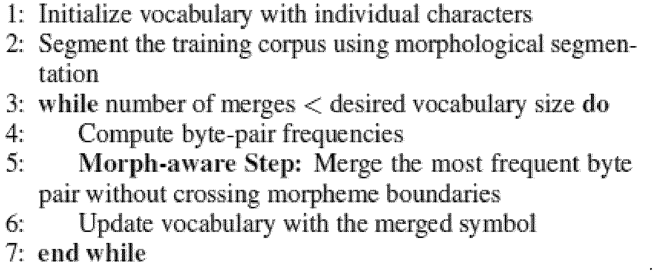

In a second aspect of the present disclosure, which may be combined with any other aspect listed herein unless specified otherwise, the algorithm is compatible with large language model training pipelines.
In a third aspect of the present disclosure, which may be combined with any other aspect listed herein unless specified otherwise, the system further comprises morphology-aware evaluation metrics to assess tokenization quality.

In a fourth aspect of the present disclosure, which may be combined with any other aspect listed herein unless specified otherwise, the morphology-aware evaluation metrics to assess tokenization quality comprise a Morph.-Edit Distance Score (µe) and a Morph.-Consistency F1-Score (F1: µc).

In a fifth aspect of the present disclosure, which may be combined with any other aspect listed herein unless specified otherwise, the Morph.-Edit Distance Score (µe) assesses how well tokenization aligns with the underlying morphological segmentation of words..

In a sixth aspect of the present disclosure, which may be combined with any other aspect listed herein unless specified otherwise, the Morph.-Edit Distance Score (µe) is computed using a pairwise alignment score based on dynamic programming.

In a seventh aspect of the present disclosure, which may be combined with any other aspect listed herein unless specified otherwise, the Morph.-Edit Distance Score (µe) is an intrinsic evaluation metric.
In an eight aspect of the present disclosure, which may be combined with any other aspect listed herein unless specified otherwise, the Morph.-Consistency Scores (F1: µc) is a morphology consistency measure.

In a ninth aspect of the present disclosure, which may be combined with any other aspect listed herein unless specified otherwise, the Morph.-Consistency Scores (F1: µc) ensures that words sharing the same morphemes also share tokens and that words with shared tokens correspondingly share morphemes.

In a tenth aspect of the present disclosure, which may be combined with any other aspect listed herein unless specified otherwise, shared morpheme/token relationships can are treated as binary events.

In an eleventh aspect of the present disclosure, which may be combined with any other aspect listed herein unless specified otherwise, a recall score denotes words sharing the same morphemes also share tokens.

In a twelfth aspect of the present disclosure, which may be combined with any other aspect listed herein unless specified otherwise, a precision score denotes words with shared tokens share morphemes.

In a thirteenth aspect of the present disclosure, which may be combined with any other aspect listed herein unless specified otherwise, the algorithm prevents frequent symbol pair merges from crossing morpheme boundaries.

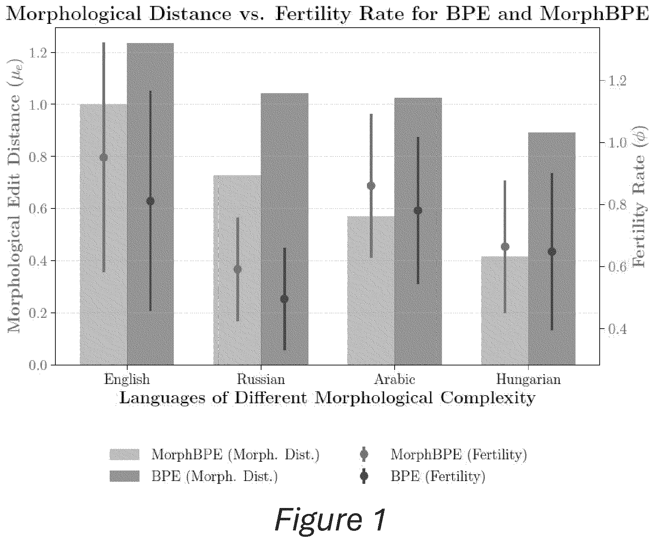

In a fourteenth aspect of the present disclosure, any of the structure, functionality, and alternatives disclosed in connection with any one or more of Figs. 1 to 3 may be combined with any other structure, functionality, and alternatives disclosed in connection with any other one or more of Figs. 1 to 3.

In light of the present disclosure and the above aspects, it is therefore an advantage of the present disclosure to provide users with a morphologically aware tokenizer and method for using a morphologically aware tokenizer.

Additional features and advantages are described in, and will be apparent from, the following Detailed Description and the Figures. The features and advantages described herein are not all-inclusive and, in particular, many additional features and advantages will be apparent to one of ordinary skill in the art in view of the figures and description. Also, any particular embodiment does not have to have all of the advantages listed herein and it is expressly contemplated to claim individual advantageous embodiments separately. Moreover, it should be noted that the language used in the specification has been selected principally for readability and instructional purposes, and not to limit the scope of the inventive subject matter.

### BRIEF DESCRIPTION OF THE FIGURES

Some example apparatus embodiments of the invention, and example procedures for making and using one or more example embodiments, are described in detail herein and by way of example, with reference to the accompanying drawings (which are not necessarily drawn to scale with regard to any internal or external structures shown) and in which like reference characters designate like elements throughout the several views, and in which:
Fig. 1 illustrates a graph comparison of morphological distance and fertility rate for Byte Pair Encoding ("BPE") and a morphology-aware extension of BPE ("MorphBPE") across four languages, according to an example of the present disclosure.
Fig. 2 illustrates Overview of a MorphBPE study evaluating the effectiveness of MorphBPE over vanilla BPE across four morphologically diverse languages (English, Russian, Hungarian, and Arabic) by aligning vocabulary size with morphological segmentation and then evaluating the tokenizers using the intrinsic evaluation metrics, according to an example of the present disclosure.
Fig. 3A-B illustrate a comparison of training cross-entropy loss between BPE and MorphBPE across four languages, results are shown for both the small (300M) and large (1B) models, according to an example of the present disclosure.

### DETAILED DESCRIPTION

Methods, systems, and apparatus are disclosed herein for a morphologically aware tokenizer.

BPE, originally introduced as a text compression algorithm (Shibata et al., 1999), was first adapted for machine translation as a tokenization method in 2016 (Sennrich et al., 2016). Since then, it has become the de facto standard in NLP and Large Language Models (LLMs) due to its efficiency in managing vocabulary size, handling out-of-vocabulary words, and capturing frequent patterns, while offering partial improvements over morphology-based tokenizers (Sennrich et al., 2016).

Despite its widespread adoption, vanilla BPE has several notable limitations: its greedy merging strategy, inefficiencies in cross-lingual settings where similar words with different character variations are not aligned, and inconsistent handling of character-level information across languages. To address these challenges, various extensions have been proposed, including BPE dropout (Provilkov et al., 2020), which introduces stochasticity to improve generalization, sampling-based BPE (Asgari et al., 2019, 2020), which enhances subword diversity, byte-level adaptations (Wang et al., 2020), which aim to improve robustness across scripts, and multilingual BPE variants (Liang et al., 2023), designed to optimize token sharing across languages.

The importance of morphology-aware tokenization for language models has been recognized in several recent studies (Park et al., 2021; Jabbar, 2023; Marco and Fraser, 2024; Weller-Di Marco and Fraser, 2024). However, an integrated solution that effectively balances morphological information with frequent pattern extraction while remaining fully compatible with modern LLM training pipelines has remained an open problem

Herein is disclosed a morphologically aware tokenizer. Specifically, the disclosed technology includes a modified byte-pair encoding algorithm, which is a general approach but specifically tested for the Arabic language. The algorithm in the disclosed technology incorporates morphological insights. The tokenizer from disclosed technology has been tested for morphological alignment, as well as language model perplexity, and found that it lowers the loss and leads to rapid convergence of it. The disclosed technology has a significant impact on language modeling, which is the heart of the recent AI advances, can be seen in products like ChatGPT, etc.

By integrating linguistic principles with modern tokenization strategies, MorphBPE bridges the gap between traditional morphological analysis and NLP, providing a computationally efficient and morphologically interpretable tokenization approach for language modeling, particularly in morphologically rich languages like Arabic. In line with this, MorphBPE has been developed and implemented in Fanar (www.fanar.qa), an Arabic-centric language model, leading to significant improvements in model performance (FanarTeam et al., 2025).

The disclosed technology is an extension of Byte Pair Encoding (BPE) that integrates linguistic knowledge into subword tokenization. Specific contributions of the disclosed technology include:

(i) A Morphology-Aware LLM Tokenizer ("MorphBPE"): MorphBPE improves adherence to linguistic structures while identifying frequent patterns, balancing token efficiency and interpretability, particularly in morphologically rich languages. It extends BPE by incorporating morphological structure while remaining fully compatible with existing LLM training pipelines.

(ii) Linguistically Informed Tokenizer Evaluation Metrics: The disclosed technology introduces morphology-aware evaluation metrics to assess tokenization quality: Morph.-Edit Distance Score: Measures edit distance at the morpheme level, quantifying segmentation accuracy; and Morph.-Consistency F1-Score: Inspired by (Marco and Fraser, 2024), evaluates the segmentation consistency, offering a linguistically grounded metric evaluating whether words that share the same morphemes are also assigned the same tokens, and vice versa. For benchmarking, there was curation of a dataset covering diverse morphological typologies (Ge and Comrie, 2022): English: Fusional, low complexity; Russian: Fusional, moderate complexity; Hungarian: Agglutinative, high complexity; Arabic: Templatic, high complexity. MorphBPE achieves superior morphological alignment and consistency, enhancing model interpretability.

(iii) Empirical Evaluation on LLM Training: MorphBPE is compared to vanilla BPE on 300M and 1B parameter LLMs across the four languages, demonstrating: Lower training loss, indicating improved linguistic representations;Faster convergence, enhancing computational efficiency.

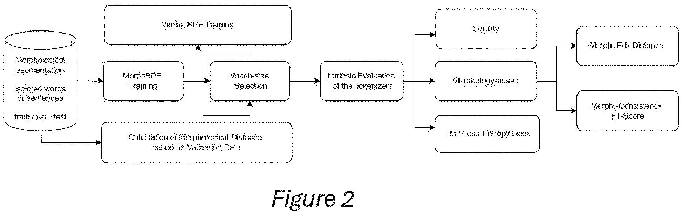

Methods: Figure 2 provides an overview of the disclosed approach. To systematically evaluate MorphBPE, one selects four languages with distinct morphological typologies, where morphological segmentation is available for training and evaluation at the word level. One determines the vocabulary sizes for each language based on optimal alignment with morphological boundaries. Then one evaluates the vanilla BPE and MorphBPE on the selected vocabulary size using intrinsic metrics detailed below.

Morphological Data: In the disclosed technology, the dataset comprises morphologically segmented words from four morphologically diverse languages (Ge and Comrie, 2022): English, Russian, Hungarian, and Arabic. The segmentation data for English, Russian, and Hungarian is sourced from the SIGMORPHON 2022 Shared Task on Morpheme Segmentation (Batsuren et al., 2022), which provides high-quality morpheme segmentations. To incorporate a root-based (templatic) morphological system, the disclosed technology includes Arabic, utilizing multiple sources: the Arabic Treebank (ATB) dataset (Taji et al., 2017), the Dialectal Segmentation Dataset (Darwish et al., 2018), and Quranic morphology data (Dukes and Habash, 2010). Additionally, this set is enriched with 1M high-confidence segmentations of frequent Arabic surface forms obtained using Farasa (Darwish and Mubarak, 2016). All datasets were cleaned and standardized. Manually annotated segmentations were split into 80% training, 10% validation, and 10% test sets. Table 1 summarizes the dataset composition.

**Table 1: Token Statistics for Morphological Segmentation Datasets Used in BPE and MorphBPE Training and Tokenizer Evaluation Across Languages.**

| Language | Morphology Type | # of Words | Avg. Morphemes per Word |
|---|---|---|---|
| Hungarian | Agglutinative | 930,312 | 3.22 |
| Russian | Fusional (moderate complexity) | 784,212 | 3.84 |
| English | Fusional (low complexity) | 571,495 | 2.33 |
| Arabic | Root-based (Templatic) | 1,395,835 | 2.50 |

LLM Training Data: To Evaluate MorphBPE vs. BPE Across Languages with Diverse Morphologies: Hungarian, Arabic, Russian, and English, a large-scale multilingual training dataset is required. FineWeb2 (Penedo et al., 2024), a comprehensive corpus covering over 1,000 languages, was selected to ensure sufficient tokens for training, following the Chinchilla scaling law (Hoffmann et al., 2022). This choice enables a balanced token distribution across the selected languages, ensuring fair and robust evaluation of MorphBPE and BPE.

MorphBPE approach: MorphBPE is a simple yet effective extension of BPE that prevents frequent symbol pair merges from crossing morpheme boundaries while keeping the rest of the algorithm unchanged (Algorithm 1). This ensures compatibility with standard BPE inference, making MorphBPE easy to integrate into existing pipelines without modifications.

**Table 2: Morph.-consistency evaluation: Precision, Recall, and F1-score for BPE and MorphBPE in different languages. A higher Fl-score (µ_{c}) indicates greater consistency in segmenting words with similar or dissimilar morphemes. Results are reported as mean ± standard deviation over multiple resamples over test sets.**

| **Model** | **Precision (Mean ± Std)** | **Recall (Mean ± Std)** | **Morph.-Consistency F1-score (*µ_{c}*)** |
|---|---|---|---|
| English BPE (96K) | 0.00 ± 0.00 | 0.03 ± 0.02 | 0.00 |
| English *MorphBPE* (96K) | 0.20 ± 0.42 | 0.30 ± 0.06 | **0.24** |
| Russian BPE (64K) | 0.10 ± 0.32 | 0.06 ± 0.01 | 0.07 |
| Russian *MorphBPE* (64K) | 0.69 ± 0.48 | 0.33 ± 0.06 | **0.45** |
| Hungarian BPE (24K) | 0.08 ± 0.25 | 0.29 ± 0.04 | 0.13 |
| Hungarian *Morph BPE* (24K) | 0.99 ± 0.03 | 0.78 ± 0.07 | **0.87** |
| Arabic BPE (96K) | 0.00 ± 0.00 | 0.08 ± 0.03 | 0.00 |
| Arabic *MorphBPE* (96K) | 0.89 ± 0.31 | 0.53 ± 0.05 | **0.66** |

Tokenization Evaluation: Tokenization evaluation can be conducted using intrinsic or extrinsic metrics. Extrinsic evaluation assesses tokenizers in the broader context of LLM performance across diverse capabilities, requiring extensive pre/post training and high-level analysis, which is beyond the scope of this work (Cecchini et al., 2024; Chia et al., 2024). Before evaluating tokenizers in downstream tasks, it is essential to first examine fundamental properties to ensure efficiency and consistency. Therefore, the disclosed technology focuses on intrinsic evaluation metrics that provide insights into the core characteristics of tokenization in large language models (LLMs).

(i) Fertility (ϕ): Fertility quantifies the number of tokens generated by a tokenizer relative to a base-line, typically a whitespace-based tokenizer (Rust et al., 2021). A lower fertility score generally indicates a more efficient representation, enabling longer contexts. However, this assumption is debatable, particularly for agglutinative languages such as Hungarian and Turkish, where capturing morphological structure necessitates more tokens to provide adequate context for each surface form. As shown in Table 1, languages vary in the average number of morphemes per word. For instance, Hungarian and Arabic require more tokenization compared to English to accurately represent their linguistic structures.

(ii) Morph.-Edit Distance Score (µe): The disclosed approach introduces a new intrinsic evaluation metric, the morphological edit distance, which assesses how well tokenization aligns with the underlying morphological segmentation of words. This metric is computed using a pairwise alignment score based on dynamic programming, ensuring that the order of matching tokens with segmented morphemes is preserved. This approach quantitatively evaluates how effectively a tokenizer respects the morphological structure of the language. This metric is referred to as the Morphology Edit Distance Score (µe), which evaluates the interpretability of the tokenizer. While it can be normalized by the number of morphemes in each word, the disclosed approach retains its raw form to provide a clearer indication of the average number of edits required.

(iii) Morph.-Consistency Scores (F1: µc): Inspired by the discussion in (Marco and Fraser, 2024), the disclosed approach proposes a morphology consistency measure, which is crucial for language model training. It ensures that words sharing the same morphemes also share tokens (recall score) and that words with shared tokens correspondingly share morphemes (precision score). This evaluation is conducted over a dataset of segmented words, where shared morpheme/token relationships can be treated as either binary events or weighted counts. For simplicity, this approach adopts a binary scheme, checking whether shared morphemes correspond to shared tokens and vice versa. Since both precision and recall are essential for avoiding unnecessary ambiguity and maintaining a consistent representation of related words, the disclosed approach uses their harmonic mean, i.e., the F1-score of morphological consistency, denoted as µc.

To ensure practical feasibility given large evaluation datasets, the disclosed approach employs k-means clustering (k = 100) to group words with similar morphemes and measure scores between C = 50 word pairs within each cluster. Precision and recall are estimated through a bootstrapping procedure, drawing N = 10 resamples from clusters.

Vocabulary Size Selection: Vocabulary size is a critical hyperparameter in LLM training, directly impacting model performance across languages. To determine the optimal vocabulary size in MorphBPE, for four languages, a morphology distance score, µe, computed over the development set is employed. Vocabulary sizes from 8K to 96K in 8K increments were evaluated, selecting the smallest size beyond which further increases did not yield statistically significant improvements in morphological alignment (measured via a t-test over the dev. vocabularies). Through this approach, the disclosed approach determined optimal sizes of 24K for Hungarian and 64K for Russian, where larger vocabularies showed diminishing returns. For English and Arabic, morphology distance continued improving with larger vocabularies, leading to selecting 96K.

The selected tokenizers were evaluated based on (i) fertility rate (ϕ), (ii) morphological edit distance score (µe), and (iii) morphological consistency score (µc) on the test sets of English, Russian, Hungarian, and Arabic. Since fertility rate is a relative measure, both MorphBPE and BPE were compared against a strong multilingual baseline-Bloomz (256K) (Yong et al., 2023), which employs a large vocabulary to accommodate multiple languages. In contrast, µe and µc are directly computed from the test data to evaluate tokenization quality with respect to linguistic structure.

(iv) Cross Entropy Loss of Language Modeling (lc) Cross-entropy loss in language modeling measures the divergence between predicted and ground truth outputs. The trajectory of training cross-entropy loss indicates how quickly a model converges and improves next-token prediction. This metric is closely related to model perplexity, a standard intrinsic evaluation measure for language models. However, cross-entropy loss is only comparable across models with identical vocabulary sizes, as vocabulary variations directly affect the model's branching factor.

Language Model Training: To assess the scalability of the disclosed approach, two model sizes were trained-300M (small) and 1B (large)-using decoder architectures within the LLaMA-Factory framework (Zheng et al., 2024). For each language, models were trained with both vanilla BPE and MorphBPE of the same vocabulary sizes, resulting in four models per language. Training loss was monitored and compared across languages and tokenization methods to evaluate their impact on learning efficiency. The Chinchilla scaling law ensured passing ≈ 6B tokens to the small and ≈ 20B tokens to the large model compatible with (Hoffmann et al., 2022).

Results: Morphological Metrics and Fertility. The results in Figure 1 and Table 2 show a clear trend: MorphBPE consistently achieves lower morphological edit distance (µe) and higher morphological consistency (µc) compared to BPE, with a slight increase in fertility rate across all languages. The extent of improvement varies based on the morphological complexity of the language. The gap in µe and µc between MorphBPE and BPE is larger for Hungarian and Arabic, which have more complex morphological structures. These results indicate that MorphBPE better preserves linguistic structure, particularly in morphologically rich languages, while BPE tends to over-fragment words based on subword frequency rather than morpheme boundaries. Higher µc of MorphBPE also reflects consistent tokenization which morphology, which can impact the convergence of language model training.

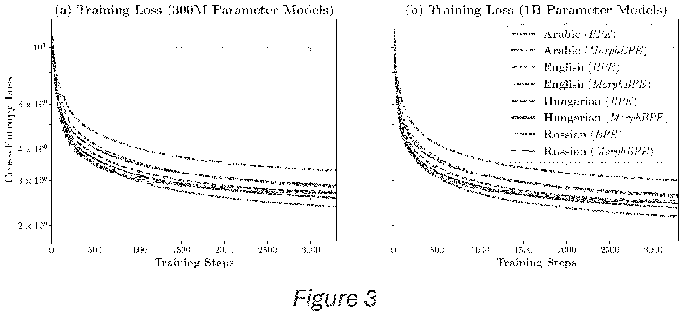

Training cross-entropy loss: The training cross-entropy loss for the four languages, using the same vocabulary and comparing BPE and MorphBPE, is presented in Figure 3. The results are shown over a training window of ≈ 14B tokens for both small and large models, with the selected interval chosen for clarity, as the overall trend remains consistent throughout training. The results indicate that MorphBPE consistently improves cross-entropy loss across all languages and model sizes, even for English language. This improvement is particularly pronounced in morphologically richer languages, where the reduction in loss is more significant. The results demonstrate lower training loss, indicating improved linguistic representations as well as faster convergence.

Extensive empirical evaluation across English, Russian, Hungarian, and Arabic demonstrated that MorphBPE consistently enhances LLM training efficiency by reducing cross-entropy loss, improving morphological alignment, and accelerating convergence across both 300M and 1B parameter models.

Another key contribution of the disclosed approach is the introduction of linguistically informed tokenizer evaluation metrics, addressing a critical gap in current tokenization evaluation. The Morphological Consistency F1-Score provides a structured measure of segmentation stability, which is essential for ensuring consistent morpheme-level representations during LLM training. This stability directly contributes to better generalization and improved learning efficiency, particularly for morphologically rich languages. Meanwhile, the Morphological Alignment Score, based on edit distance at the morpheme level, serves as a linguistically grounded metric, that can contribute to the interpretability of the tokenizer.

MorphBPE, despite having higher fertility, results in a more interpretable and more consistent and more efficient tokenizer for LLM training. This suggests that fertility-a commonly used metric in tokenization evaluation-may not be the most reliable indicator of tokenizer quality of an efficient LLM training. An additional advantage of MorphBPE is its full compatibility with existing LLM training and inference pipelines, requiring minimal modifications to the tokenization process. This ensures easy integration without disrupting standard work-flows.

It should be understood that various changes and modifications to the presently preferred embodiments described herein will be apparent to those skilled in the art. Such changes and modifications can be made without departing from the spirit and scope of the present subject matter and without diminishing its intended advantages. It is therefore intended that such changes and modifications be covered by the appended claims.

## Claims

1. A system for a morphologically aware tokenizer, the system comprising:
a Byte Pair Encoder, and
an algorithm for morphologically aware Byte Pair Encoding, the algorithm comprising:

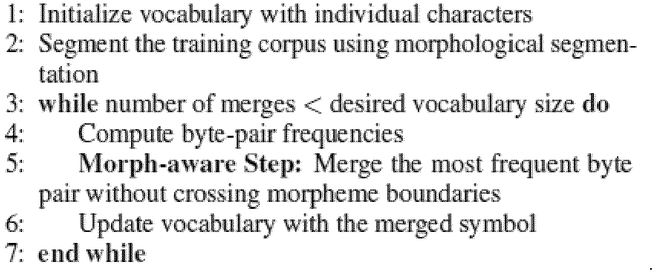

2. The system of claim 1, wherein the algorithm is compatible with large language model training pipelines.

3. The system of claim 1, wherein the system further comprises morphology-aware evaluation metrics to assess tokenization quality.

4. The system of claim 3, wherein the morphology-aware evaluation metrics to assess tokenization quality comprise a Morph.-Edit Distance Score (µe) and a Morph.-Consistency F1-Score (F1: µc).

5. The system of claim 4, wherein the Morph.-Edit Distance Score (µe) assesses how well tokenization aligns with the underlying morphological segmentation of words.

6. The system of claim 5, wherein the Morph.-Edit Distance Score (µe) is computed using a pairwise alignment score based on dynamic programming.

7. The system of claim 4, wherein the Morph.-Edit Distance Score (µe) is an intrinsic evaluation metric.

8. The system of claim 4, wherein the Morph.-Consistency Scores (F1: µc) is a morphology consistency measure.

9. The system of claim 4, wherein the Morph.-Consistency Scores (F1: µc) ensures that words sharing the same morphemes also share tokens and that words with shared tokens correspondingly share morphemes.

10. The system of claim 9, wherein shared morpheme/token relationships can are treated as binary events.

11. The system of claim 9, wherein a recall score denotes words sharing the same morphemes also share tokens.

12. The system of claim 9, wherein a precision score denotes words with shared tokens share morphemes.

13. The system of claim 1, wherein the algorithm prevents frequent symbol pair merges from crossing morpheme boundaries.
